# EUROPEAN PATENT SPECIFICATION

(11) **EP 1 791 479 B1**
(45) Date of publication and mention of the grant of the patent: **13.04.2016**
(21) Application number: 05795124.6
(22) Date of filing: 06.09.2005
(51) Int. Cl.: A61C 17/34

(54) **ELECTRIC TOOTHBRUSHES**
ELEKTRISCHE ZAHNBÜRSTEN
BROSSES A DENTS ELECTRIQUES

(30) Priority: 07.09.2004 US 607764 P
(43) Date of publication of application: 06.06.2007
(73) Proprietor: The Procter & Gamble Company, Cincinnati, OH 45202 (US)
(72) Inventor: CHAN, John, Geoffrey, Mainville, Ohio 45039 (US); GALL, Douglas, A., Strongsville, Ohio 44136 (US)
(74) Representative: Schneider, Stefan Michael
(86) International application number: PCT/US2005/031923
(87) International publication number: WO 2006/029235

(56) References cited:
- CN-Y- 2 614 647
- DE-A1- 10 211 391

## Description

### TECHNICAL FIELD OF THE INVENTION

The present invention relates to electric toothbrushes, and, more particularly, to toothbrushes having a shaft that pivots.

### BACKGROUND OF THE INVENTION

Electric toothbrushes utilizing various drive mechanisms are known in the art. However, there is a continuing desire to provide electric toothbrushes utilizing drive mechanisms that can provide multiple bristle holder movements, which are mechanically efficient, and/or which can provide smaller more compact arrangements.

Document DE 102 11 391 A1 describes an electric toothbrush having a handle, a neck, a head, a motor disposed within the handle and a shaft operatively connected with the motor. The shaft performs a double-conical around a bushing. The shaft is operatively connected with a first and a second bristle holder. The shaft moves the first bristle holder into an oscillating motion around an axis perpendicular to a longitudinal axis. Various back-and-forth movements are considered for the second bristle holder.

### SUMMARY OF THE INVENTION

An electric toothbrush is provided. The electric toothbrush has a handle, a head with first and second bristle holders and a longitudinal axis, and a neck disposed between the handle and the head. A motor is disposed within the handle. A shaft is operatively connected to the motor. The shaft pivots in a side-to-side direction and is operatively connected to the first and second bristle holders to move the second bristle holder in a side-to-side direction and to oscillate the first bristle holder about an axis generally perpendicular to the longitudinal axis of the head.

### BRIEF DESCRIPTION OF THE DRAWINGS

While the specification concludes with claims directed to the invention, it is believed that the present invention will be better understood from the following description taken in conjunction with the accompanying drawings in which:
Fig. 1 is an exploded perspective view of an electric toothbrush made in accordance with the present invention;
Fig. 2 is a top plan view of the shaft, bushing and driven gear of the electric toothbrush of Fig. 1;
Fig. 3 is a side elevation view of the head of the toothbrush of Fig. 1;
Fig. 4 is a top plan view of the head of Fig. 3;
Fig. 5 is a top plan view of another embodiment of a head suitable for use with the toothbrush of Fig. 1;
Fig. 6 is a side elevational view of the first bristle holder of the toothbrush of Fig. 1; and
Fig. 7 is another side elevational view of the first bristle holder of Fig. 6.

### DETAILED DESCRIPTION OF THE INVENTION

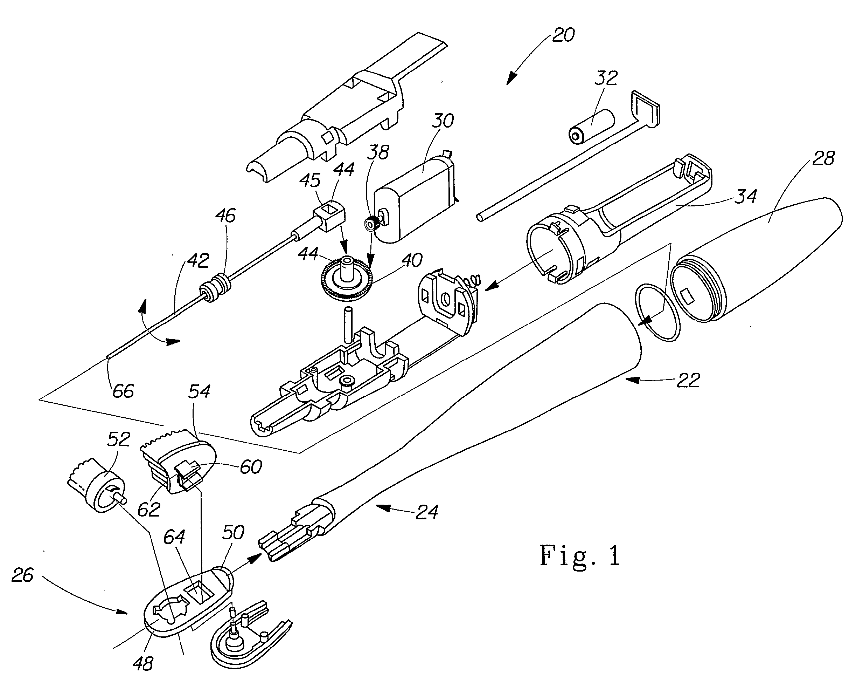

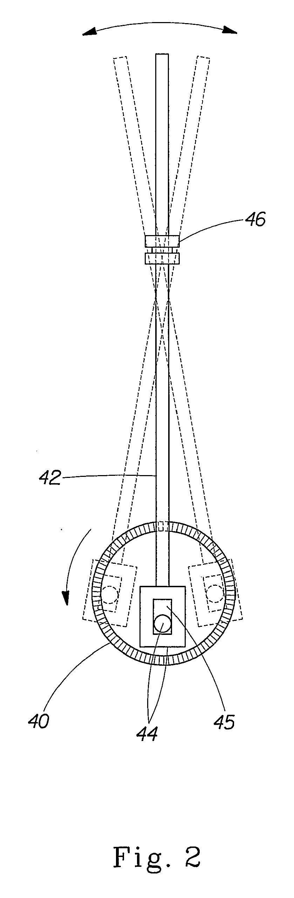

Reference will now be made to various embodiments of the present invention examples of which are illustrated in the accompanying drawings wherein like numerals indicate the same elements throughout the views. Referring to Fig. 1, an electric toothbrush 20 will now be described. The electric toothbrush 20 comprises a handle 22, a neck 24, and a head 26. The neck 24 may be integrally formed with the handle 22 or may be provided as a separate component. The handle 22 has a cap 28 that threadably engages a portion of the handle 22. An electric motor 30 is disposed within the handle 22 along with a voltage source. The voltage source can be provided in the form of one or more batteries 32 which are received in a cradle 34 that is disposed within the handle 22. The motor 30 has a rotatable output shaft and an output gear 38 attached to the rotatable output shaft. The output gear 38 engages a driven gear 40 which in turn is operatively connected to a shaft 42 having a coupling 44 with an elongated slot 45 that engages an eccentric post 44 of the driven gear 40. The slot 45 is aligned along the longitudinal axis of the shaft 42. The shaft includes a bushing 46 that is captured by the handle 22 or neck 24. The bushing 46 can be formed of any flexible material that allows the shaft 42 to pivot about the bushing 46. Suitable materials can include elastomeric polymers, such as natural or synthetic rubbers. The bushing 46 acts a pivot about which the shaft 42 moves. The location of the bushing 46 can be varied along the length of the shaft 42 in order to achieve a desired amount of side-to-side motion at the end of the shaft 42 adjacent the head 26. As the driven gear 40 rotates, the shaft 42 pivots about the bushing 46 in a side-to-side direction as best seen in Fig. 2. The side-to-side motion of the shaft 42 occurs substantially or entirely in a single plane.

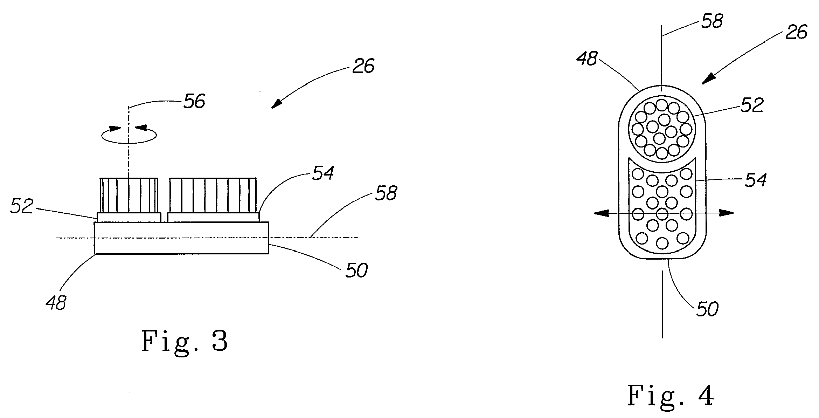

The head 26 has a first free end 48 and a second end 50 that engages the neck 24. The head includes one or more bristle holders. The electric toothbrush 20 comprises two bristle holders. A first bristle holder 52 is disposed adjacent the first end 48 and a second bristle holder 54 is disposed adjacent the second end 50. The first bristle holder 52 oscillates about an axis 56 that is substantially perpendicular to a longitudinal axis 58 of the head 26, as seen in Fig. 3. The second bristle holder 54 reciprocates in a side-to-side direction or motion perpendicular to the longitudinal axis of the head, as seen in Fig. 4. While the side-to-side motion shown in Fig. 4 is substantially perpendicular to the longitudinal axis 58 of the head 26, it is contemplated that other side-to-side motions of the second bristle holder 54 can be provided. For example, the second bristle holder 54 might swing or pivot about a pin or hinge 53. The pin or hinge could be provided at other locations on the second bristle holder 54, such as at either end or in the middle to provide different types motions in a side-to-side direction.

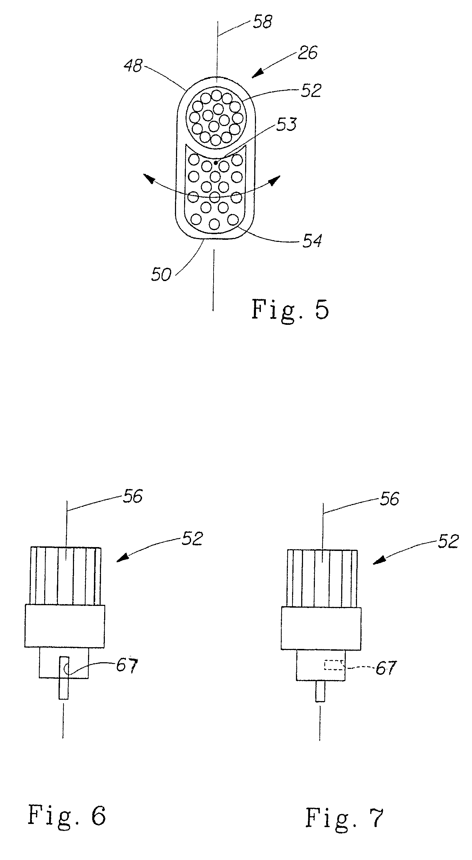

The shaft 42 passes through an extension 60 of the second bristle holder 54. The extension 60 has a hole 62 therein that receives a portion of the shaft 42. The extension 60 is received in slot 64 of the head 26 that guides the second bristle holder 54 in its side-to-side motion. The end 66 of the shaft 42 operatively engages a slot 67 (Figs. 6 and 7) of the first bristle holder 52 to move the first bristle holder 52 in an oscillating motion about the axis 56.

## Claims

1. An electric toothbrush (20), comprising:
a handle (22);
a head (26) having first and second bristle holders (52, 54) and a longitudinal axis (58);
a neck (24) disposed between said handle and said head;
a motor (30) disposed within said handle; and
a shaft (42) operatively connected to said motor, said shaft is operatively connected to said first bristle holder (52) to oscillate said first bristle holder about an axis generally perpendicular to the longitudinal axis of said head,
**characterized in that** said shaft pivots in a side-to-side direction and wherein said shaft is operatively connected to said second bristle holder to move said second bristle holder in a side-to-side direction.

2. The electric toothbrush according to claim 1, wherein said second bristle holder moves in a direction substantially perpendicular to said longitudinal axis of said second bristle holder.

3. The electric toothbrush according to claim 1, wherein said second bristle holder further comprises a pivot (53) and said second bristle holder moves in said side-to-side direction about said pivot.

4. The electric toothbrush according to any of the preceding claims, further comprising a bushing (46), said shaft being received through and pivoting about said bushing.

5. The electric toothbrush according to claim 4, wherein said bushing is made from an elastomeric polymer.

6. The electric toothbrush according to any of the preceding claims, wherein a bottom surface of said first bristle holder and a bottom surface of said second bristle holder contact a top surface of said head.

7. The electric toothbrush according to any of the preceding claims, wherein said second bristle holder comprises a depending element (60) which passes through an aperture (64) of said head.

8. The electric toothbrush according to claim 4, wherein said bushing is oriented approximately about the center of a length of said shaft.

9. The electric toothbrush according to claim 7, wherein said shaft engages said depending element of said second bristle holder and engages a portion (67) of said first bristle holder.

10. The electric toothbrush according to claim 4, wherein said shaft pivots in said side-to-side direction in substantially a single plane.

## Patentansprüche

1. Elektrische Zahnbürste (20), umfassend:
einen Griff (22);
ein Kopfstück (26), das einen ersten und einen zweiten Borstenhalter (52, 54) und eine Längsachse (58) aufweist;
einen Hals (24), der zwischen dem Griff und dem Kopfstück angeordnet ist;
einen Motor (30), der innerhalb des Griffs angeordnet ist; und
einen Schaft (42), der wirkend mit dem Motor verbunden ist, wobei der Schaft wirkend mit dem ersten Borstenhalter (52) verbunden ist, um den ersten Borstenhalter um eine Achse herum, die im Allgemeinen lotrecht zu der Längsachse des Kopfstücks ist, hin- und herzubewegen,
**dadurch gekennzeichnet, dass** sich der Schaft in eine Seite-zu-Seite-Richtung dreht und wobei der Schaft wirkend mit dem zweiten Borstenhalter verbunden ist, um den zweiten Borstenhalter in eine Seite-zu-Seite-Richtung zu bewegen.

2. Elektrische Zahnbürste nach Anspruch 1, wobei sich der zweite Borstenhalter in eine Richtung bewegt, die im Wesentlichen lotrecht zu der Längsachse des zweiten Borstenhalters ist.

3. Elektrische Zahnbürste nach Anspruch 1, wobei der zweite Borstenhalter ferner einen Drehpunkt (53) umfasst und sich der zweite Borstenhalter um den Drehpunkt in die Seite-zu-Seite-Richtung dreht.

4. Elektrische Zahnbürste nach einem der vorstehenden Ansprüche, ferner umfassend eine Buchse (46), wobei der Schaft durch die Buchse aufgenommen wird und sich um die Buchse herum dreht.

5. Elektrische Zahnbürste nach Anspruch 4, wobei die Buchse aus einem elastomeren Polymer hergestellt ist.

6. Elektrische Zahnbürste nach einem der vorstehenden Ansprüche, wobei eine Unterseite des ersten Borstenhalters und eine Unterseite des zweiten Borstenhalters eine Oberseite des Kopfstücks berühren.

7. Elektrische Zahnbürste nach einem der vorstehenden Ansprüche, wobei der zweite Borstenhalter ein abhängiges Element (60) umfasst, das durch eine Öffnung (64) des Kopfstücks hindurchtritt.

8. Elektrische Zahnbürste nach Anspruch 4, wobei die Buchse ungefähr um die Mitte einer Länge des Schafts ausgerichtet ist.

9. Elektrische Zahnbürste nach Anspruch 7, wobei der Schaft in das abhängige Element des zweiten Borstenhalters eingreift und in einen Abschnitt (67) des ersten Borstenhalters eingreift.

10. Elektrische Zahnbürste nach Anspruch 4, wobei sich der Schaft im Wesentlichen in einer einzelnen Ebene in die Seite-zu-Seite-Richtung dreht.

## Revendications

1. Brosse à dents électrique (20), comprenant :
un manche (22) ;
une tête (26) ayant des premier et second supports de poils (52, 54) et un axe longitudinal (58) ;
un col (24) disposé entre ledit manche et ladite tête ;
un moteur (30) disposé dans ledit manche ; et
un arbre (42) relié fonctionnellement audit moteur, ledit arbre est relié fonctionnellement audit premier support de poils (52) pour faire osciller ledit premier support de poils autour d'un axe sensiblement perpendiculaire à l'axe longitudinal de ladite tête,
**caractérisée en ce que** ledit arbre pivote dans une direction allant d'un côté à l'autre, et dans laquelle ledit arbre est relié fonctionnellement audit second support de poils pour faire bouger ledit second support de poils dans une direction allant d'un côté à l'autre.

2. Brosse à dents électrique selon la revendication 1, dans laquelle ledit second support de poils bouge dans une direction sensiblement perpendiculaire audit axe longitudinal dudit second support de poils.

3. Brosse à dents électrique selon la revendication 1, dans laquelle ledit second support de poils comprend en outre un pivot (53) et ledit second support de poils bouge dans ladite direction allant d'un côté à l'autre autour dudit pivot.

4. Brosse à dents électrique selon l'une quelconque des revendications précédentes, comprenant en outre une douille (46), ledit arbre étant reçu à travers ladite douille et pivotant autour de celle-ci.

5. Brosse à dents électrique selon la revendication 4, dans laquelle ladite douille est réalisée en un polymère élastomère.

6. Brosse à dents électrique selon l'une quelconque des revendications précédentes, dans laquelle une surface inférieure dudit premier support de poils et une surface inférieure dudit second support de poils sont en contact avec une surface supérieure de ladite tête.

7. Brosse à dents électrique selon l'une quelconque des revendications précédentes, dans laquelle ledit second support de poils comporte un élément dépendant (60) qui passe à travers une ouverture (64) de ladite tête.

8. Brosse à dents électrique selon la revendication 4, dans laquelle ladite douille est orientée sensiblement autour du centre d'une longueur dudit arbre.

9. Brosse à dents électrique selon la revendication 7, dans laquelle ledit arbre vient en prise avec ledit élément dépendant dudit second support de poils et vient en prise avec une partie (67) dudit premier support de poils.

10. Brosse à dents électrique selon la revendication 4, dans laquelle ledit arbre pivote dans ladite direction allant d'un côté à l'autre, sensiblement dans un même plan.
